(19) Europäisches Patentamt
European Patent Office
Office européen des brevets

(11) EP 4 613 812 A1

(12) EUROPEAN PATENT APPLICATION
published in accordance with Art. 153(4) EPC

(43) Date of publication:
**10.09.2025 Bulletin 2025/37**

(21) Application number: **23886174.4**

(22) Date of filing: **30.10.2023**

(51) International Patent Classification (IPC):
***C08L 67/02*** (2006.01) ***C08L 67/04*** (2006.01)
***C08L 33/06*** (2006.01) ***C08K 3/34*** (2006.01)
***C08K 9/04*** (2006.01)

(52) Cooperative Patent Classification (CPC):
**C08K 3/34; C08K 9/04; C08L 33/06; C08L 67/02; C08L 67/04**

(86) International application number:
**PCT/KR2023/017004**

(87) International publication number:
**WO 2024/096478 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 KR 20220142894**

(71) Applicants:
- **LG CHEM, LTD.**
  **Seoul 07336 (KR)**
- **Seoul National University R&DB Foundation**
  **Seoul 08826 (KR)**

(72) Inventors:
- **JEONG, Moon Gon**
  **Daejeon 34122 (KR)**
- **PARK, Jaeyong**
  **Daejeon 34122 (KR)**
- **HONG, Joung Sook**
  **Seoul 34122 (KR)**
- **YANG, Jin Hoon**
  **Seoul 34122 (KR)**
- **LEE, Chunhwa**
  **Daejeon 34122 (KR)**
- **AHN, Kyung Hyun**
  **Seoul 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) RESIN COMPOSITION AND BIODEGRADABLE RESIN MOLDED PRODUCT COMPRISING SAME

(57) The present invention relates to a resin composition and a biodegradable resin molded product comprising the same. The resin composition of the present invention can realize excellent mechanical properties while maintaining the inherent biodegradability of polybutylene adipate terephthalate or polylactic acid.

【FIG. 1】

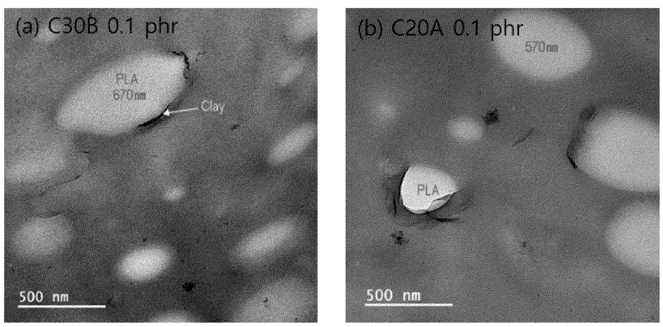




Processed by Luminess, 75001 PARIS (FR)

## Description

## [TECHNICAL FIELD]

### Cross Reference(s)

This application claims the benefit of priority based on Korean Patent Application No. 10-2022-0142894 filed on October 31, 2022, all the content of which is incorporated herein by reference.

The present invention relates to a resin composition and a biodegradable resin molded product comprising the same.

## [BACKGROUND ART]

Thermoplastic polymer resins have excellent mechanical and chemical properties and are used in various fields such as a drinking water container, a medical application, a food packaging paper, a food container, an automobile molded product, and an agricultural vinyl.

Since thermoplastic polymer resins, especially polyethylene films, have excellent mechanical properties, are harmless to the human body, and can be continuously deformed by applying heat, they are often used as hot seal bags for food packaging, agricultural mulch films, and the like.

Hot seal bags for food packaging are often used for vacuum packaging foods and the like, and polyethylene films and the like, which can achieve excellent bonding strength even at low sealing temperatures, are often used.

The above agricultural film is often used in mulching farming. A mulch refers to a material that is used to cover the soil surface when cultivating crops. Covering the upper surface of the soil with various types of materials can inhibit the growth of weeds and prevent pests and diseases, thereby reducing the use of pesticides. In addition, the temperature of the soil can be easily adjusted, and beneficial bacteria in the soil can also be grown, thereby preventing soil erosion and maintaining soil moisture.

Such mulch materials include, for example, leaves of crops such as rice straw and grass, or polyolefin-based films, and generally, synthetic resins such as polyethylene films are often used.

However, as described above, polyethylene films, which are often used as a hot seal bags for food packaging or mulch materials, do not decompose in the natural environment and has limitations in their recycling. Particularly in recent years, it is known that discarded plastics, such as polyethylene films, flow into the sea, and are shredded into very small microplastics by reflux and sunlight in the sea.

Currently, it is known that countless amounts of such microplastics, ranging from billions to tens of billions, are floating in the sea, which enters the bodies of sea creatures, accumulate within the ecosystem, and affect the entire food chain.

Therefore, research into an alternative material for thermoplastic plastics used previously is needed.

In order to solve this problem, active attempts have been made in recent years to develop mulching films made of photodegradable or biodegradable polymers, but there are still problems that the biodegradability is not sufficient and the mechanical properties are inferior to those of existing polyethylene films.

## [DETAILED DESCRIPTION OF THE INVENTION]

### [Technical Problem]

It is an object of the present invention to provide a resin composition that has excellent mechanical properties while being excellent in biodegradability, and a biodegradable resin molded product comprising the same.

### [Technical Solution]

Provided herein is a resin composition comprising: a polybutylene adipate terephthalate, a polylactic acid, nanoclay, and an epoxy-(meth)acrylate-based copolymer.

According to an embodiment of the invention, the resin composition may comprise 1 to 45 parts by weight of the polylactic acid based on 100 parts by weight of the polybutylene adipate terephthalate.

According to an embodiment of the invention, the resin composition may have a weight ratio of polybutylene adipate terephthalate : polylactic acid of 6.5:3.5 to 9.5:0.5.

According to an embodiment of the invention, the resin composition may comprise the nanoclay in an amount of about 0.01 to about 5 parts by weight, or about 0.01 parts by weight or more, or about 0.05 parts by weight or more, or about 5 parts by weight or less, or about 3 parts by weight or less, or about 1 part by weight or less, or about 0.5 parts by weight or

less, based on100 parts by weight of the polybutylene adipate terephthalate.

According to an embodiment of the invention, the nanoclay may have a wetting coefficient value, more specifically, a wetting coefficient value for polybutylene adipate terephthalate and polylactic acid of about -1 to about 1.

According to an embodiment of the invention, the nanoclay may be located at an interface between the polybutylene adipate terephthalate and the polylactic acid in the composition.

According to an embodiment of the invention, the nanoclay may be a surface-modified nanoclay containing an alkyl group having 1 to 20 carbon atoms on its surface.

According to another embodiment of the invention, the nanoclay may be a surface-modified nanoclay that has been modified by an ammonium-based compound containing an alkyl group having 1 to 20 carbon atoms, and contains a residue of the ammonium-based compound containing an alkyl group having 1 to 20 carbon atoms on its surface

According to an embodiment of the invention, the epoxy-(meth)acrylate-based copolymer may be (A) a repeating unit derived from an epoxy-(meth)acrylate-based monomer, and (B) a copolymer comprising at least one selected from the group consisting of a repeating unit (b1) derived from (meth)acrylate monomers, a repeating unit (b2) derived from vinyl monomers, a repeating unit (b3) derived from aromatic vinyl monomers and a repeating unit (b4) derived from nitrile monomers.

According to an embodiment of the invention, the epoxy-(meth)acrylate-based copolymer may be contained in an amount of about 0.01 to about 15 parts by weight based on 100 parts by weight of the polybutylene adipate terephthalate.

According to an embodiment of the invention, the epoxy-(meth)acrylate-based copolymer may be contained in an amount of about 1 to about 1000 parts by weight based on 100 parts by weight of the nanoclay.

According to an embodiment of the invention, the resin composition may comprise about 1 to about 50 parts by weight of an inorganic filler based on 100 parts by weight of the total of the polybutylene adipate terephthalate and the polylactic acid.

According to an embodiment of the invention, the average particle size of the polylactic acid domain in the resin composition may be about 1 $\mu$m or less.

According to another aspect of the present invention, there is provided a biodegradable resin molded product comprising the above-mentioned resin composition.

According to an embodiment of the invention, the biodegradable resin molded product may have an elongation value of about 300% or more, or about 400% or more, or about 500% or more, or about 600% or more, which is measured according to the ASTM D638 standard, and the upper limit thereof is not critical, but may be about 2000% or less, or about 1700% or less, or about 1500% or less.

According to an embodiment of the invention, the biodegradable resin molded product may have a tensile strength value of 1MPa or more, or about 2 MPa or more, or about 5 MPa or more, or about 10 MPa or more, which is measured according to the ASTM D638 standard, and the upper limit thereof is not critical, but may be about 30 MPa or less, or about 25 MPa or less.

The terms "first," "second," etc. are used herein to explain various elements, and these terms are only used to distinguish one constitutional element from the other constitutional elements.

Further, technical terms used herein is for the purpose of describing exemplary embodiments only and is not intended to limit the scope of the invention.

The singular forms "a," "an" and "the" are intended to include plural forms, unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case a layer or an element is mentioned to be formed "on" or "above" layers or elements, it means that the layer or element is directly formed on the layers or elements, or it means that other layers or elements may be additionally formed between the layers, on a subject, or on a substrate.

Although the present invention may have various forms and various modifications can be made thereto, specific examples will be exemplified and explained in detail. However, it is not intended to limit the present invention to disclosed forms, and it should be understood that all the modifications, equivalents or substitutions within the idea and technical scope of the present invention are included in the present invention.

As used herein, the nanoclay means a nanomaterial containing a clay mineral and having at least one dimension of length, width, or thickness in nanometer units (about 1 to about 100 nm). Nanoclay mainly has a thickness in nanometer units and has a plate shape with a large aspect ratio of length to thickness or width to thickness, and exists in a state of plate-shaped silicates stacked together.

Now, the present disclosure will be described in more detail.

Provided herein is a resin composition comprising: a polybutylene adipate terephthalate, a polylactic acid, nanoclay, and an epoxy-(meth)acrylate-based copolymer.

The present inventors have found that when nanoclay and epoxy-(meth)acrylate copolymer are used together in a blended resin that is a blend of polybutylene adipate terephthalate (PBAT) and polylactic acid (PLA), it is possible to improve the compatibility between polybutylene adipate terephthalate and polylactic acid, thereby realizing excellent mechanical properties such as elongation, tensile strength, and elastic modulus of the blended resin, and completed the present invention.

A resin composition according to one aspect of the present invention comprises a polybutylene adipate terephthalate (PBAT), a polylactic acid, nanoclay, and an epoxy-(meth)acrylate-based copolymer.

The resin composition may contain the polylactic acid in an amount of about 1 to about 45 parts by weight, or about 1 part by weight or more, or about 5 parts by weight or more, or about 10 parts by weight or more, or about 45 parts by weight or less, or about 43 parts by weight or less, based on 100 parts by weight of the polybutylene adipate terephthalate (PBAT).

The weight ratio of polybutylene adipate terephthalate: polylactic acid in the resin composition may be about 6.5:3.5 to about 9.5:0.5, or about 6.5:3.5 or more, or about 6.9:3.1 or more, or about 7.5:2.5 or more, or about 9.5:0.5 or less, or about 9.1:0.9 or less.

If the content of polylactic acid is too small, the effect of improving the mechanical properties of polybutylene adipate terephthalate may not appear. If the content of polylactic acid is too large, there may be a problem that the hardness increases and the elongation of the resin composition decreases. In particular, when the resin composition is processed into a biodegradable film, or the like, there may be a problem that the processability may deteriorate and it is difficult to realize the physical properties required when used as applications such as a mulching film or the like.

The polyester-based resins have excellent mechanical and chemical properties and thus are used in various industrial fields. Among them, since polybutylene adipate terephthalate (PBAT) is a soft polyester that is biodegradable, it is attracting attention as an alternative material for polyolefin-based polymers, which are mainly used in food packaging materials and agricultural films.

However, since the mechanical properties of PBAT may be slightly insufficient to use soft PBAT alone for this purpose, it is mainly used by blending with a hard polylactic acid (PLA); or PBAT is used alone, but is used by compounding with an organic filler such as carbon black.

When PBAT and PLA are blended and used, since the compatibility of PBAT and PLA is very low, a compatibilizer must be used.

Therefore, the resin composition according to one aspect of the present invention includes nanoclay in order to improve the compatibility of the two resins.

Specific examples of nanoclay include montmorillonite, saponite, nontronite, laponite, beidelite, hectorite, vermiculite, magadiite, kaolin, serpentine, mica, or the like, however, the present invention is not necessarily limited thereto.

According to an embodiment of the invention, the resin composition may contain the nanoclay in an amount of about 0.01 to about 5 parts by weight, or about 0.01 parts by weight or more, or about 0.05 parts by weight or more, or about 5 parts by weight or less, or about 3 parts by weight or less, or about 1 part by weight or less, or about 0.5 parts by weight or less based on 100 parts by weight of the polybutylene adipate terephthalate.

If the content of nanoclay is too small, there may be a problem that the amount of nanoclay located at an interface between polybutylene adipate terephthalate and polylactic acid is too small, and thus the effect of improving compatibility does not appear. If the content of nanoclay is too high, there may be a problem that nanoclay is located within the resin matrix or domain, or the particles are aggregated together, and thus the compatibility of polybutylene adipate terephthalate and polylactic acid is rather reduced.

According to an embodiment of the invention, the nanoclay may have a wetting coefficient value for polybutylene adipate terephthalate and polylactic acid of about -1 to about 1, or about -1 or more, or about -0.5 or more, or about -0.3 or more, and about 1 or less, or about 0.5 or less, or about 0.3 or less.

Here, the wetting coefficient can be found from the interfacial energy value after calculating the surface energy value between two materials using the contact angle between respective materials measured according to the ASTM D5725 standard, and calculating the interfacial energy from this.

The wetting coefficient is also known as a spreading coefficient, and refers to the difference between the value of work of adhesion and the value of work of cohesion at the interface when dissimilar materials come into contact.

The wetting coefficient value of particle C for polymers A and B can generally be calculated according to Young's Equation as shown in the following Mathematical Formula 1.

[Mathematical Formula 1]

$$\omega_C = \frac{\gamma_{C-Pol\ B} - \gamma_{C-Pol\ A}}{\gamma_{Pol\ A-Pol\ B}}$$

wherein, in Mathematical Formula 1, $\omega_C$ is the wetting coefficient value of particle C for polymers A and B, $\gamma_{C\text{-}Pol\ B}$ is the interfacial energy value of particle C and polymer B, $\gamma_{C\text{-}Pol\ A}$ is the interfacial energy value of polymer C and polymer A, and $\gamma_{Pol\ A\text{-}Pol\ B}$ is the interfacial energy value of polymer A and polymer B.

The interfacial energy value between materials can be calculated according to the harmonic mean equation or the geometric mean equation.

The harmonic mean equation can be used when two materials, i.e., two phases, are similar in degree of polarity, and the polar component is similar to the non-polar component (or dispersive component), and the geometric mean equation can be used when two materials, i.e., two phases, are similar in ionization potential and the polar component is more dominant than the dispersive component.

The harmonic mean equation can be represented by the following Mathematical Formula 1-1, and the geometric mean equation can be represented by the following Mathematical Formula 1-2.

[Mathematical Formula 1-1]

$$\gamma_{12} = \gamma_1 + \gamma_2 - 4\left(\frac{\gamma_1^d \gamma_2^d}{\gamma_1^d + \gamma_2^d} + \frac{\gamma_1^p \gamma_2^p}{\gamma_1^p + \gamma_2^p}\right)$$

[Mathematical Formula 1-2]

$$\gamma_{12} = \gamma_1 + \gamma_2 - 2\left(\sqrt{\gamma_1^d \gamma_2^d} + \sqrt{\gamma_1^p \gamma_2^p}\right)$$

wherein, in Mathematical Formulas 1-1 and 1-2, $\gamma_{12}$ is the interfacial energy value between the first material and the second material, $\gamma_1$ is the surface energy value of the first material, $\gamma_2$ is the surface energy value of the second material, $\gamma_1^d$ means the non-polar part of the surface energy value of the first material, $\gamma_1^p$ means the polar part of the surface energy value of the first material, $\gamma_2^d$ means the non-polar part of the surface energy value of the second material, and $\gamma_2^p$ means the polar part of the surface energy value of the second material.

For reference, the solid surface energy of the particle can be calculated through the contact angle with a reference liquid measured according to the ASTM D5725 standard and the following Mathematical Formula 2.

[Mathematical Formula 2]

$$\sigma_l(1+\cos\theta) = 2\left(\sqrt{\sigma_s^{LW}\sigma_l^{LW}} + \sqrt{\sigma_s^{+}\sigma_l^{-}} + \sqrt{\sigma_s^{-}\sigma_l^{+}}\right)$$

$$\sigma_s = \sigma_s^{LW} + 2\sqrt{\sigma_s^{+}\sigma_s^{-}}$$

wherein, in Mathematical Formula 2, $\theta$ is the contact angle, $\sigma_l$ is the surface energy value of the liquid phase, $\sigma_s$ is the surface energy value of the solid phase, $\sigma_l^{LW}$ is the non-polar component of the surface energy value of the liquid phase, $\sigma_s^{LW}$ is the non-polar component of the surface energy value of the solid phase, $\sigma_s$+ and $\sigma_s$- are the polar components of the surface energy value of the solid phase, respectively, and $\sigma_l$+ and $\sigma_l$- are the polar components of the surface energy

value of the liquid phase, respectively.

Since three unknown variables are used in Equation 2, each term in Mathematical Formula 2 can be found by measuring the contact angle between each standard liquid and the particle using three standard liquids which know the surface energy values.

For more details on this, refer to Eur. Polym. J, 2014, 60, 135-144.

However, the present invention is not necessarily limited to such measurement methods or calculation methods, and can be used for measuring the wetting coefficient if the same method is used for measuring the surface energy value at the mutual interface of nanoclay, polylactic acid, and polybutylene adipate terephthalate.

According to one embodiment of the invention, the nanoclay may be located at an interface between the polybutylene adipate terephthalate and the polylactic acid in the composition.

That is, nanoclay having the wetting coefficient value as described above is located at an interface between the polybutylene adipate terephthalate and the polylactic acid in the composition, and thus can improve the compatibility of the polybutylene adipate terephthalate and the polylactic acid.

If the wetting coefficient value is too large or too small, there may be a problem that nanoclay is not located at the interface between polymers in the composition, but exists in a dispersive state dispersed within one polymer domain, which does not make a significant contribution to improving compatibility.

According to one embodiment of the invention, the nanoclay may be a surface-modified nanoclay containing an alkyl group having 1 to 20 carbon atoms, or 1 or more carbon atoms, or 5 or more carbon atoms, or 10 or more carbon atoms, or 20 or less carbon atoms on the surface.

Nanoclay whose surface has been modified as described above can have the above-mentioned interface properties, and thus can contribute to improving the compatibility of polybutylene adipate terephthalate and polylactic acid.

If the number of carbons in the alkyl group located on the surface of nanoclay is too small or too large, nanoclay may not be located at the interface between polybutylene adipate terephthalate and polylactic acid, whereby there may be a problem that the above-mentioned effects of improving the compatibility of polybutylene adipate terephthalate and polylactic acid are not exhibited significantly.

According to another embodiment of the invention, the nanoclay may be a surface-modified nanoclay that has been modified with an ammonium-based compound containing an alkyl group having 1 to 20 carbon atoms, or 1 or more carbon atoms, or 5 or more carbon atoms, or 10 or more carbon atoms, or 20 or less carbon atoms, and contains a residue of the ammonium-based compound containing an alkyl group having 1 to 20 carbon atoms, or 1 or more carbon atoms, or 5 or more carbon atoms, or 10 or more carbon atoms, or 20 or less carbon atoms on its surface.

According to an embodiment of the invention, the resin composition includes an epoxy-(meth)acrylate-based copolymer.

Here, the epoxy-(meth)acrylate-based copolymer means a homopolymer or copolymer containing repeating units derived from an epoxyalkyl (meth)acrylate monomer containing an epoxy group in the molecule.

In addition, the epoxyalkyl (meth)acrylate monomer may mean, for example, an epoxyalkyl (meth)acrylate whose alkyl group has 1 to 10 carbon atoms, and more specifically, have the following Chemical Formula.

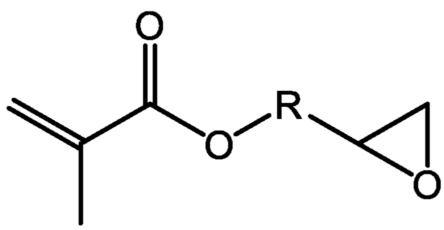

wherein, in Chemical Formula, R is an alkylene group having 1 to 10 carbon atoms, which may be a straight chain, or a branched chain depending on the number of carbon atoms.

According to another embodiment of the invention, the resin composition may include a graft polymer in which the epoxy-(meth)acrylate copolymer is used as the main chain, and at least one of polybutylene adipate terephthalate(PBAT) and polylactic acid is connected to the side chain of the repeating unit included in the aromatic epoxy compound.

Epoxy-(meth)acrylate-based copolymer has structural characteristics that include a plurality of epoxy groups in the molecule, and therefore, can increase the flexibility of the polymer chain and can increase the commercial viability of polybutylene adipate terephthalate and polylactic acid, and further can increase chain diffusion and entanglement between film interfaces when films are made using such compositions.

More specifically, the above-mentioned epoxy group can react with the hydroxy group or carboxyl group existing in the polybutylene adipate terephthalate and/or polylactic acid molecule to extend the length of the polymer chain, or to form a graft copolymer as described above.

Thereby, the resin composition according to one aspect of the present invention can achieve excellent

mechanical properties while maintaining excellent biodegradability.

According to one embodiment of the invention, the epoxy-(meth)acrylate-based copolymer may be (A) a repeating unit derived from an epoxy-(meth)acrylate-based monomer, and (B) a copolymer comprising at least one selected from the group consisting of a repeating unit (b1) derived from (meth)acrylate monomers, a repeating unit (b2) derived from vinyl monomers, a repeating unit (b3) derived from aromatic vinyl monomers and a repeating unit (b4) derived from nitrile monomers.

That is, the epoxy-(meth)acrylate-based copolymer necessarily includes a repeating unit derived from an epoxy-(meth)acrylate-based monomer, and additionally may be a copolymer containing any one or more of (B) a repeating unit (b1) derived from (meth)acrylate monomers, a repeating unit (b2) derived from vinyl monomers, a repeating unit (b3) derived from aromatic vinyl monomers, and a repeating unit (b4) derived from nitrile monomers.

The repeating unit derived from the (meth)acrylate-based monomer may mean a repeating unit derived from an alkyl (meth)acrylate monomer containing an alkyl group having 1 to 5 carbon atoms.

The repeating unit (b2) derived from vinyl monomers may mean an alkene having 1 to 5 carbon atoms, that is, a repeating unit derived from an olefin-based monomer.

The repeating unit derived from an aromatic vinyl monomer may mean a repeating unit derived from a styrene monomer, more specifically, an aryl-alkene monomer containing an aromatic ring in the molecule.

The repeating unit derived from a nitrile-based monomer may mean an alkene-based monomer containing a nitrile group in the molecule, or a (meth)acryloyl-based monomer containing a nitrile group in the molecule.

According to one embodiment of the invention, the epoxy-(meth)acrylate-based copolymer may be contained in an amount of about 0.01 to about 15 parts by weight based on 100 parts by weight of the polybutylene adipate terephthalate.

In particular, the epoxy-(meth)acrylate copolymer is capable of interacting with the nanoclay described above, and due to the interaction between the nanoclay and the epoxy-(meth)acrylate-based copolymer, the epoxy-(meth)acrylate-based copolymer is also located at an interface between polybutylene adipate terephthalate and polylactic acid within the resin composition.

Due to such characteristics, the epoxy-(meth)acrylate-based copolymer can interact simultaneously with polybutylene adipate terephthalate and polylactic acid within the resin composition, thereby further improving the effect due to the use of the above-mentioned epoxy-(meth)acrylate copolymer and particularly, greatly increasing the compatibility of polybutylene adipate terephthalate and polylactic acid.

According to an embodiment of the invention, the epoxy-(meth)acrylate-based copolymer may be contained in an amount of about 1 to about 1000 parts by weight based on 100 parts by weight of the nanoclay.

If the amount of the epoxy-(meth)acrylate-based copolymer used relative to nanoclay is too small or too large, there may be a problem that the above-mentioned synergistic effect is not achieved.

Further, the resin composition may contain only the polybutylene adipate terephthalate, polylactic acid, and aromatic epoxy compound as the resin components. That is, it may be preferable that the resin composition according to an embodiment of the present invention does not contain any other resin or polymer component in addition to polybutylene adipate terephthalate and polylactic acid.

In addition, the resin composition according to an embodiment of the invention may further include other additives. As the additives, common additives used in the molding of resin compositions in the technical field to which the present invention pertains, that is, in the field of thermoplastic polymers, can be used without any particular restrictions.

The additive may include a heat stabilizer, a UV stabilizer, and the like.

Further, the additive may be contained in an amount of about 1 to about 30 parts by weight based on 100 parts by weight of the total of the polybutylene adipate terephthalate and polylactic acid.

Further, the resin composition may contain an inorganic filler in an amount of about 1 to about 50 parts by weight, or about 10 to about 30 parts by weight, or about 15 to about 25 parts by weight based on 100 parts by weight of the total of the polybutylene adipate terephthalate and polylactic acid.

The inorganic filler can improve the mechanical properties and processability of the resin composition. If the content of the inorganic filler is too small, there may be a problem that the above-mentioned beneficial effects are not achieved. If the content of the inorganic filler is too high, there may be a problem that the mechanical properties and processability of the resin composition are deteriorated.

According to an embodiment of the invention, the average particle size of the polylactic acid domain in the resin composition may be about 1$\mu$m or less, or about 800nm or less, or about 700nm or less. The lower limit thereof is not critical, but may be about 100 nm or more.

Since polybutylene adipate terephthalate and polylactic acid are not completely mixed with each other, they exist in the respectively partitioned states within the blending resin. In general, polylactic acid may exist in the polybutylene adipate terephthalate matrix in a dispersed state having independent fixed regions, i.e., domains.

Therefore, as used herein, the diameter of the polylactic acid domain means the diameter measured when the polylactic acid domain formed in a spherical or irregular shape within the polybutylene adipate terephthalate matrix is

approximated by a circle, more specifically, the diameter of the circle when the irregular domain that appears when observing the surface or cross section of the resin composition is approximated by a circle. In particular, when the shape of the observed domain does not approximate to a circle, it means the longest straight line, that is, the longest diameter, among the straight lines passing through the center point of the domain.

Further, the average domain diameter means the number average value of the domain diameter values described above.

This average domain diameter value can be measured and confirmed by analyzing the image of the resin composition obtained through SEM or the like using an image analysis program or the like.

The resin composition according to an embodiment of the present invention has high cmpatibility between polybutylene adipate terephthalate and polylactic acid, so that the domain size of polylactic acid dispersed in the polybutylene adipate terephthalate matrix is very small, and thus, polylactic acid can exist in uniformly dispersed in the polybutylene adipate terephthalate.

Further, according to another aspect of the present invention, a biodegradable resin molded article containing the above-mentioned resin composition is provided.

According to an embodiment of the invention, the biodegradable resin molded product has an elongation value of about 300% or more, or about 400% or more, or about 500% or more, or about 600% or more, which is measured according to the ASTM D638 standard, and the upper limit thereof is not critical, but may be about 2000% or less, or about 1700% or less, or about 1500% or less.

According to an embodiment of the invention, the biodegradable resin molded product has a tensile strength value of about 10 MPa or more, or about 11 MPa or more, which is measured according to the ASTM D638 standard, and the upper limit thereof is not critical, but may be about 30 MPa or less, or about 25 MPa or less.

The biodegradable resin molded article according to one aspect of the present invention may be a biodegradable film.

The biodegradable resin molded product according to an embodiment of the present invention can be used for applications such agricultural mulching films or food packaging materials due to its excellent mechanical properties.

**[Advantageous Effects]**

The resin composition of the present invention can realize excellent mechanical properties while maintaining the inherent biodegradability of polybutylene adipate terephthalate and polylactic acid.

**[BRIEF DESCRIPTION OF THE DRAWINGS]**

FIG. 1 is a TEM image which observes the morphology of resin compositions according to Comparative Examples.
FIG. 2 is an SEM image which observes the morphology of resin compositions according to Examples of the present invention.
FIG. 3 shows the results of measuring the mechanical properties of resin compositions according to Examples of the present invention.
FIG. 4 is an SEM image which observes the morphology of resin compositions according to Comparative Examples and Examples of the present invention.
FIG. 5 is a TEM image which observes the morphology of resin compositions according to Comparative Examples and Examples of the present invention.
FIG. 6 shows the results of measuring the mechanical properties of resin compositions according to Comparative Examples and Examples of the present invention.

**[DETAILED DESCRIPTION OF THE EMBODIMENTS]**

Hereinafter, actions and effects of the invention will be described in more detail with reference to specific examples of the invention. However, these examples are for illustrative purposes only, and the scope of the invention is not limited thereby in any way.

<Example>

A product available from Hengli Petrochemical having a melt index (MI, 190°C, 2.16 Kg) of 3.8g/10min was used as polybutylene adipate terephthalate.

A product available from Nature Works having a melt index (MI, 210°C, 2.16Kg) of 7.0g/10min was used as

polylactic acid.

The composition ratio of polybutylene adipate terephthalate and polylactic acid was fixed at 80:20.

C30B and C20A available from BYK were used as nanoclay.

Joncryl ADR 4468 available from BASF, was used as an epoxy-(meth)acrylate copolymer (compatibilizer).

A resin composition was prepared according to the composition shown in Table 1 below. Specifically, polybutylene adipate terephthalate, polylactic acid, nanoclay and optionally a compatibilizer were added according to the composition shown in Table below, melted and mixed at about 190°C and 100rpm using an internal batch mixer (Rheocomp mixer 600, MKE, Korea) to prepare a resin composition.

The prepared resin composition was prepared into a specimen for analysis using a compression molding machine (CH4386, Carver, 190°C).

**Measurement of tensile strength and elongation**

Using a universal testing machine (manufacturer: GALDABINI, model name: QUASUR 50), the tensile strength and elongation values of the film were measured according to the ASTM D638 standard.

The specimen was prepared in the form of ASTM D638 Type 5 Dogbone.

[Table 1]

| | PBAT (pts.wt.) | PLA (pts.wt.) | NC (material, pts.wt.) | Compatibilizer (pts.wt.) |
|---|---|---|---|---|
| Comparative Example 1 | 80 | 20 | - | - |
| Comparative Example 2 | 80 | 20 | - | 0.1 |
| Comparative Example 3 | 80 | 20 | C30B, 0.1 | - |
| Comparative Example 4 | 80 | 20 | C30B, 0.5 | - |
| Comparative Example 5 | 80 | 20 | C30B, 1.0 | - |
| Comparative Example 6 | 80 | 20 | C20A, 0.1 | - |
| Comparative Example 7 | 80 | 20 | C20A, 0.5 | - |
| Comparative Example 8 | 80 | 20 | C20A, 1.0 | - |
| Example 1 | 80 | 20 | C30B, 0.1 | 0.1 |
| Example 2 | 80 | 20 | C30B, 0.5 | 0.1 |
| Example 3 | 80 | 20 | C30B, 1.0 | 0.1 |
| Example 4 | 80 | 20 | C20A, 0.1 | 0.1 |
| Example 5 | 80 | 20 | C20A, 0.5 | 0.1 |
| Example 6 | 80 | 20 | C20A, 1.0 | 0.1 |
| *PBAT: polybutylene adipate terephthalate; PLA: polylactic acid; NC: nanoclay; Compatibilizer: Joncryl ADR 4468 | | | | |

FIG. 1 is a TEM image which observes the morphology of resin compositions according to Comparative Examples 3 and 6.

Referring to FIG. 1, it can be confirmed that within the resin composition, the nanoclay component is located at an interface between polybutylene adipate terephthalate and polylactic acid.

FIG. 2 is an SEM image which observes the morphology of resin compositions according to Comparative Examples 3 to 8.

Referring to FIG. 2, it can be confirmed that within the resin composition, polylactic acid domains are formed to have a relatively small particle size. It can also be clearly confirmed that the domain particle size of polylactic acid is formed uniformly. This appears to be an effect due to the addition of nanoclay.

FIG. 3 is an SEM image which observes the morphology of resin compositions according to Comparative Example 2 and Examples 1 to 6.

Referring to FIG. 3, it can be clearly confirmed that, when nanoclay and compatibilizer are used in combination, the size of the dispersed phase of the polylactic acid domain becomes smaller as compared to the case where the compatibilizer is used alone, and that as the content of nanoclay increases, the size of the polylactic acid domain becomes smaller and its interface becomes unclear. This is interpreted to be due to higher compatibility of polylactic acid and polybutylene adipate terephthalate depending on the interaction between nanoclay and compatibilizer.

FIG. 4 is a TEM image which observes the morphology of resin compositions according to Comparative Example 2, Example 2, and Example 5.

Referring to FIG. 4, it can be confirmed that within the resin composition according to Example 2 and Example 5, most nanoclay particles are located at the interface between polylactic acid and polybutylene adipate terephthalate. It can be clearly confirmed that the interface of the polylactic acid domain becomes unclear.

FIG. 5 shows the results of measuring the mechanical properties of resin compositions according to Comparative Example 1 and Examples 1 to 6.

Referring to FIG. 5, it can be confirmed that the resin composition according to an embodiment of the present invention has very excellent mechanical properties such as elongation and tensile strength.

## Claims

**1.** A resin composition comprising:

a polybutylene adipate terephthalate,
a polylactic acid,
nanoclay, and
an epoxy-(meth)acrylate-based copolymer.

**2.** The resin composition as claimed in claim 1,
which comprises 1 to 45 parts by weight of the polylactic acid based on 100 parts by weight of the polybutylene adipate terephthalate.

**3.** The resin composition as claimed in claim 1, wherein:
a weight ratio of polybutylene adipate terephthalate : polylactic acid is 6.5:3.5 to 9.5:0.5.

**4.** The resin composition as claimed in claim 1, wherein:
which comprises 0.01 to 5 parts by weight of the nanoclay based on 100 parts by weight of the polybutylene adipate terephthalate.

**5.** The resin composition as claimed in claim 1, wherein:
the nanoclay has a wetting coefficient value for polybutylene adipate terephthalate and polylactic acid of -1 to 1.

**6.** The resin composition as claimed in claim 1, wherein:
the nanoclay is located at an interface between the polybutylene adipate terephthalate and the polylactic acid.

**7.** The resin composition as claimed in claim 1, wherein:
the nanoclay is a surface-modified nanoclay containing an alkyl group having 1 to 20 carbon atoms on its surface.

**8.** The resin composition as claimed in claim 1, wherein:
the epoxy-(meth)acrylate-based copolymer is a copolymer comprising:

(A) a repeating unit derived from an epoxy-(meth)acrylate-based monomer, and
(B) at least one selected from the group consisting of a repeating unit (b1) derived from (meth)acrylate monomers, a repeating unit (b2) derived from vinyl monomers, a repeating unit (b3) derived from aromatic vinyl monomers and a repeating unit (b4) derived from nitrile monomers.

**9.** The resin composition as claimed in claim 1, wherein:
the epoxy-(meth)acrylate-based copolymer is contained in an amount of 0.01 to 15 parts by weight based on 100 parts by weight of the polybutylene adipate terephthalate.

**10.** The resin composition as claimed in claim 1, wherein:
the epoxy-(meth)acrylate-based copolymer is contained in an amount of 1 to 1000 parts by weight based on 100 parts by weight of the nanoclay.

**11.** The resin composition as claimed in claim 1,
which comprises 1 to 50 parts by weight of an inorganic filler based on 100 parts by weight of the total of the

polybutylene adipate terephthalate and the polylactic acid.

**12.** A biodegradable resin molded product comprising the resin composition as claimed in any one of claims 1 to 11.

**13.** The biodegradable resin molded product as claimed in claim 12, wherein:
an elongation value measured according to the ASTM D638 standard is 300% or more.

**14.** The biodegradable resin molded product as claimed in claim 12, wherein:
a tensile strength value measured according to the ASTM D638 standard is 1MPa or more.

【FIG. 1】

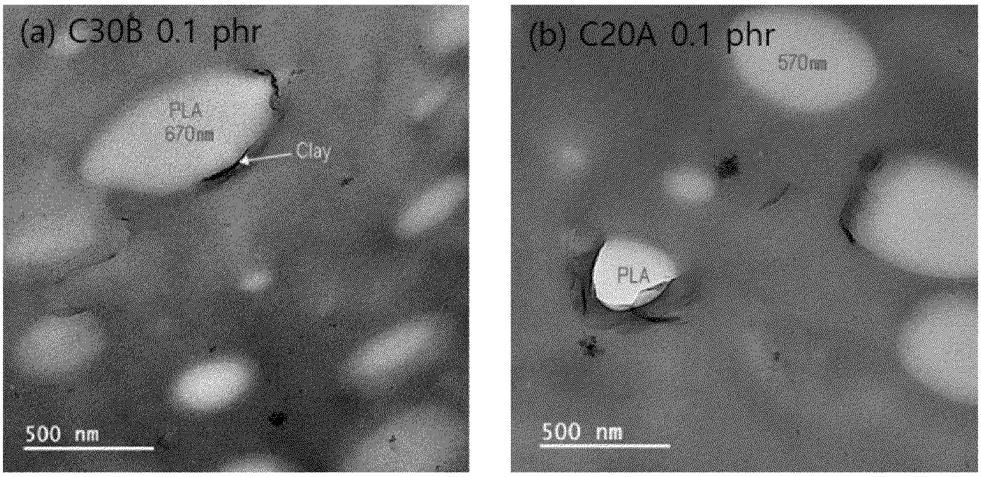
(a) C30B 0.1 phr
PLA
670nm
Clay
500 nm
(b) C20A 0.1 phr
570nm
PLA
500 nm

【FIG. 2】

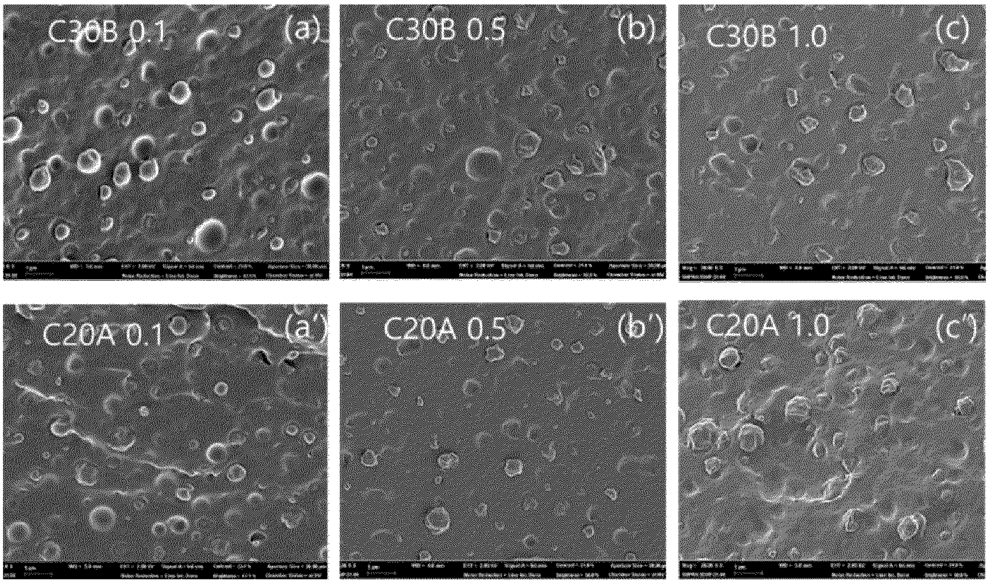
C30B 0.1
(a)
C30B 0.5
(b)
C30B 1.0
(c)
C20A 0.1
(a')
C20A 0.5
(b')
C20A 1.0
(c')

【FIG. 3】

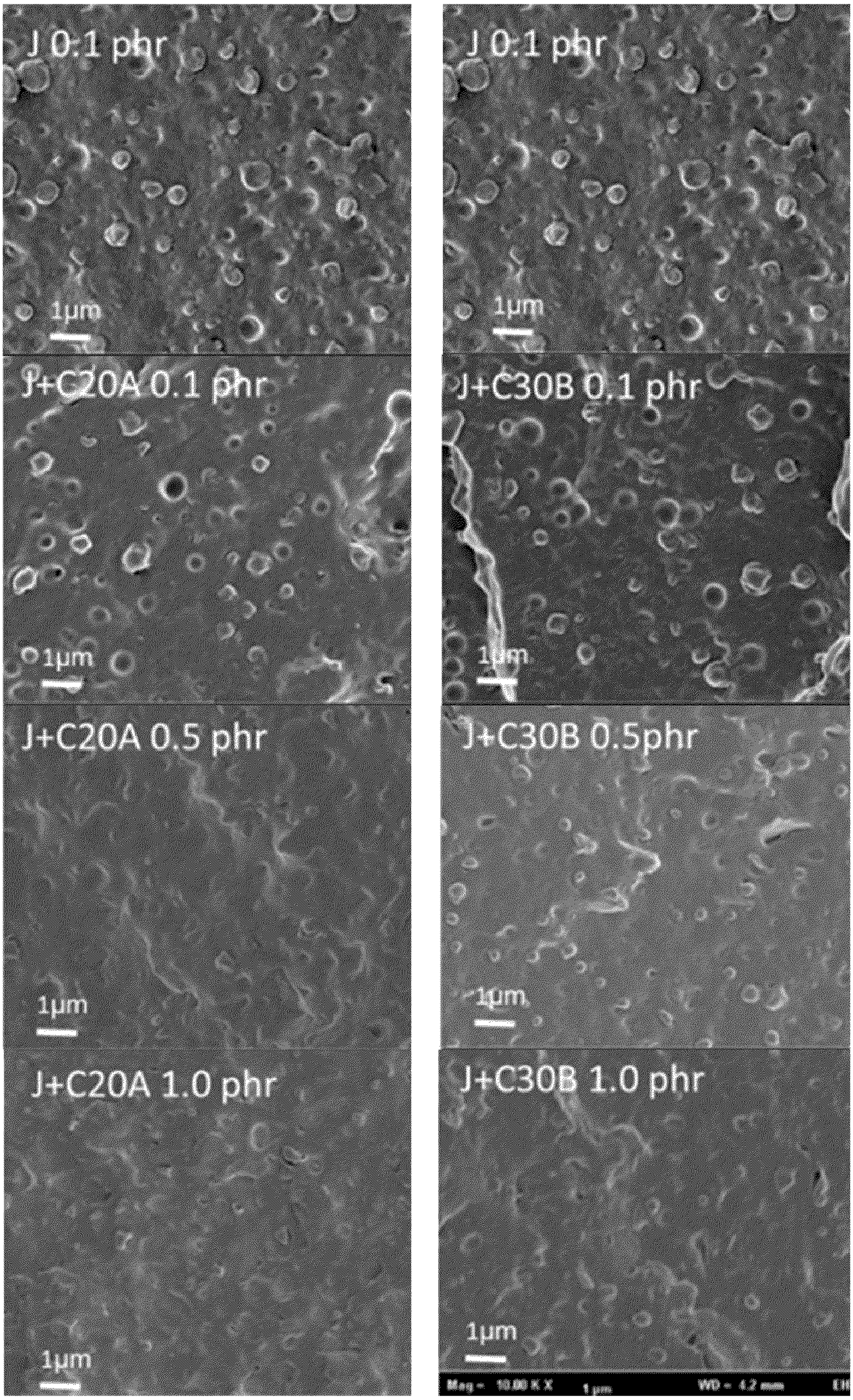
J 0.1 phr
J 0.1 phr
J+C20A 0.1 phr
J+C30B 0.1 phr
J+C20A 0.5 phr
J+C30B 0.5phr
J+C20A 1.0 phr
J+C30B 1.0 phr
1μm

【FIG. 4】

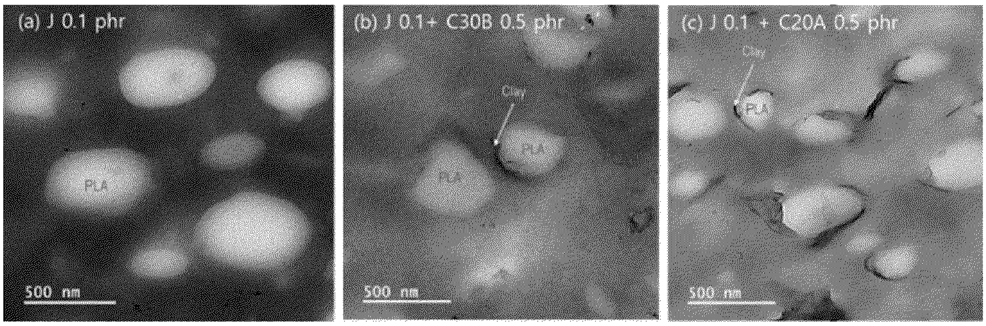
(a) J 0.1 phr
PLA
500 nm
(b) J 0.1+ C30B 0.5 phr
Clay
PLA
PLA
500 nm
(c) J 0.1 + C20A 0.5 phr
Clay
PLA
500 nm

【FIG. 5】

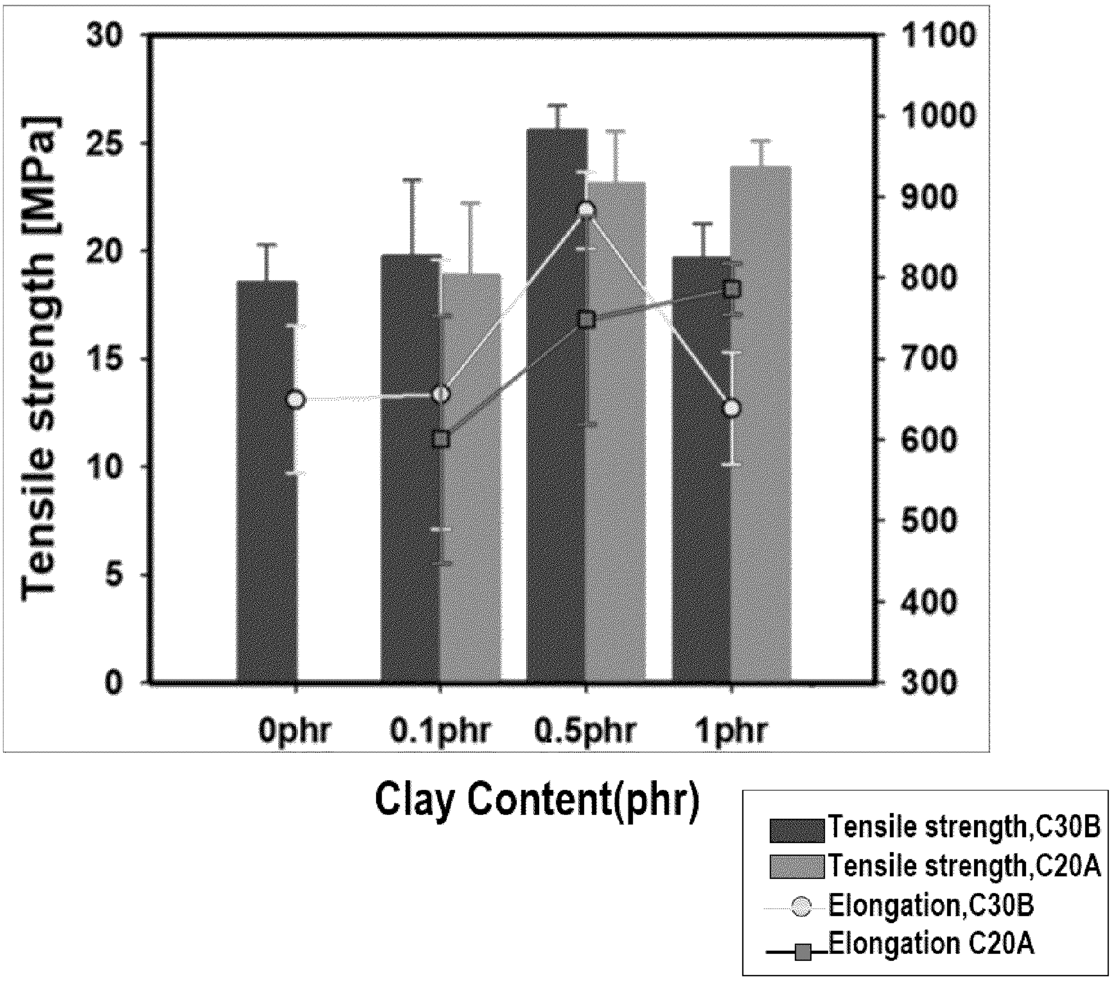
Tensile strength [MPa]
30
25
20
15
10
5
0
1100
1000
900
800
700
600
500
400
300
0phr
0.1phr
0.5phr
1phr
Clay Content(phr)
Tensile strength,C30B
Tensile strength,C20A
Elongation,C30B
Elongation C20A

## INTERNATIONAL SEARCH REPORT

International application No.
**PCT/KR2023/017004**

### A. CLASSIFICATION OF SUBJECT MATTER

**C08L 67/02**(2006.01)i; **C08L 67/04**(2006.01)i; **C08L 33/06**(2006.01)i; **C08K 3/34**(2006.01)i; **C08K 9/04**(2006.01)i

According to International Patent Classification (IPC) or to both national classification and IPC

### B. FIELDS SEARCHED

Minimum documentation searched (classification system followed by classification symbols)

C08L 67/02(2006.01); B29C 48/09(2019.01); B29C 48/32(2019.01); B82Y 30/00(2011.01); C08J 7/04(2006.01); C08L 23/06(2006.01); C08L 3/02(2006.01); C08L 67/00(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리부틸렌아디페이트테레프탈레이트 (polybutylene adipate terephthalate ), 폴리락트 산 (polylactic acid), 나노클레이 (nanoclay), 에폭시-(메트)아크릴레이트 (epoxy-(meth)acrylate), 생분해성 (biodegradable)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0064259 A (DANIMER BIOPLASTICS, INC.) 02 June 2021 (2021-06-02)<br>See claims 8-9 and 22; and paragraph [0004]. | 1-14 |
| Y | CN 111718566 A (MITAC PRECISION TECHNOLOGY (KUNSHAN) CO., LTD.) 29 September 2020 (2020-09-29)<br>See claims 1-4. | 1-14 |
| Y | KR 10-0657936 B1 (TORAY SAEHAN INC.) 14 December 2006 (2006-12-14)<br>See claim 2; and paragraph [0015]. | 6-7 |
| A | WO 2021-007534 A1 (BIOLOGIQ, INC.) 14 January 2021 (2021-01-14)<br>See entire document. | 1-14 |
| A | KR 10-2382498 B1 (TIPA CORP. LTD.) 01 April 2022 (2022-04-01)<br>See entire document. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/017004**

| Patent document cited in search report | Publication date (day/month/year) | Patent family member(s) | Publication date (day/month/year) |
|---|---|---|---|
| KR 10-2021-0064259 A | 02 June 2021 | CN 113330069 A | 31 August 2021 |
| | | EP 3853304 A1 | 28 July 2021 |
| | | JP 2022-512557 A | 07 February 2022 |
| | | JP 7248784 B2 | 29 March 2023 |
| | | US 2020-0095420 A1 | 26 March 2020 |
| | | WO 2020-060597 A1 | 26 March 2020 |
| CN 111718566 A | 29 September 2020 | None | |
| KR 10-0657936 B1 | 14 December 2006 | KR 10-2006-0003580 A | 11 January 2006 |
| WO 2021-007534 A1 | 14 January 2021 | CN 114430759 A | 03 May 2022 |
| | | EP 3997171 A1 | 18 May 2022 |
| | | JP 2022-539869 A | 13 September 2022 |
| | | KR 10-2022-0035141 A | 21 March 2022 |
| KR 10-2382498 B1 | 01 April 2022 | CN 105916919 A | 31 August 2016 |
| | | EP 3060601 A1 | 31 August 2016 |
| | | EP 3060601 B1 | 06 January 2021 |
| | | JP 2016-537495 A | 01 December 2016 |
| | | KR 10-2016-0106556 A | 12 September 2016 |
| | | US 10239292 B2 | 26 March 2019 |
| | | US 10647093 B2 | 12 May 2020 |
| | | US 11007758 B2 | 18 May 2021 |
| | | US 2016-0257098 A1 | 08 September 2016 |
| | | US 2019-0152203 A1 | 23 May 2019 |
| | | US 2020-0290327 A1 | 17 September 2020 |
| | | WO 2015-059709 A1 | 30 April 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220142894


### Non-patent literature cited in the description


- *Eur. Polym. J*, 2014, vol. 60, 135-144